# EUROPEAN PATENT SPECIFICATION

(11) **EP 1 566 411 B1**
(45) Date of publication and mention of the grant of the patent: **28.03.2007**
(21) Application number: 04100667.7
(22) Date of filing: 19.02.2004
(51) Int. Cl.: C08L 93/00, E04D 5/02

(54) **Coloured roofing felt**
Gefärbte Filzprodukte als Dachabdeckung
Revêtement de couverture coloré

(43) Date of publication of application: 24.08.2005
(73) Proprietor: KRATON Polymers Research B.V., 1030 BH Amsterdam (NL)
(72) Inventor: Trommelen, Erik A.T., NL-1030BH, Amsterdam (NL); Damen, Jacques W.M., NL-1030BH, Amsterdam (NL)
(74) Representative: Kortekaas, Marcel C.J.A.

(56) References cited:
- EP-A- 0 728 814
- EP-A- 1 348 737
- WO-A-02/057386

## Description

### Technical field

The present invention relates to a roofing felt comprising a colourable binder composition, as well as the colourable composition used as binder.

### Background art

Roofing felt is a flexible sheet manufactured by the interlocking of fibres through a combination of mechanical work and heat without spinning, weaving or knitting, held together with a binder. Roofing felts are manufactured from vegetable fibres (organic felts), polymer fibres (polyester in particular), asbestos fibres (asbestos felts) or glass fibres (glass felts). A membrane is a flexible or semiflexible roof covering or water proofing whose primary function is the exclusion of water. A shingle is a small unit of prepared roofing material designed for installation with similar units on overlapping rows on inclines normally exceeding 25 percent. A roofing membrane may be built up of several layers.
Commonly used are bituminous felts often surfaced with mineral aggregate. Bitumen is a class of amorphous, black or dark coloured (solid, semi-solid or viscous) cementious substances, naturally or manufactured, composed principally of high molecular weight hydrocarbons and found in asphalts, tars, pitches and asphaltites. In the roofing industry there are two basic bitumens: asphalt and coal-tar pitch.

Examples of bituminous binder compositions for roofing felt and similar applications may be found in US patents nos. 4,405,680; 4,904,713; 5,051,457; 5,447,775; 5,308,676; 5,719,216; 5,854,335; 5,798,401 and 6,120,913. These compositions differ from the bituminous compositions used in road applications. Thus, a bituminous composition for road application cannot be used for roofing purposes.

There is a growing demand for aesthetic roofing felts, like coloured roofing felts, waterproofing sheets and shingles and the like, preferably in white or bright colours. These roofing felts need to be easy to lay-out, easy to weld, compatible with bitumen, have similar of better mechanical properties than roofing felt based on bituminous compositions, and have similar or better ageing resistance. These coloured roofing felts should also be environmentally friendly, hence free of chlorine, ruling out PVC based felts.

In EP 179510 A (SHELL) 16.12.1986 a binder composition is disclosed which is pigmentable comprising from 30 to 99 wt % of a mineral lubricating oil extract and from 70 to 1 wt % of a petroleum resin and/or coumarone-indene resin, characterized in that the petroleum resin and/or coumarone-indene resin contains moieties derived from carboxylic acid, carboxylic acid anhydride or hydroxyl groups. The binder composition may also contain minor proportions, such as 0-30%w, e.g. 0.5-10%w, based on the binder of other ingredients, such as blown or unblown bitumen, e.g. propane bitumen; natural or synthetic rubbers, e.g. optionally hydrogenated, linear or branched, e.g. star-shaped, block copolymers of styrene and a conjugated diene (e.g. butadiene or isoprene); waxes, such as paraffin waxes; polymers such as polyethylene, polypropylene and poly(iso)butene; tackyfiers, such as Li salts of C10-40 (hydroxy) fatty acids, e.g. Li (hydroxy) stearate to render the present compositions self-adhesive; etc. A colourable composition suitable for roofing felts and the like, meeting present day requirements regarding high and low temperature characteristics is not mentioned.

In JP 2002206047 (SHOWA SHELL) 26.07.2002 a colourable binder composition is provided having exhibiting excellent weather resistance. The binder composition is especially designed for paving, typically comprising from 2 to 4% by weight of thermoplastic elastomer. This binder does not exhibit the properties required for roofing felt. In particular low temperature flexibility (Cold bend) and high temperature resistance (softening point R&B; DIN Flow, PEN at 50°C) is missing.

It is therefore an object of the present invention to provide a colourable binder composition that is in processability similar to bituminous compositions, whilst combining colour stability and these low temperature/high temperature properties.

### Disclosure of the Invention

Accordingly, there is provided a colourable roofing felt comprising fibrous material and a non-bituminous binder comprising:
1. a bitumen-like compound having a PEN value of at least 30 dmm at 25°C, and comprising at least a hydrogenated petroleum resin (a) or comprising at least a hydrogenated petroleum resin (a) and an oil (b),
2. from 10 to 25 parts by weight on 100 parts of the bitumen-like compound of a hydrogenated styrenic block copolymer (c) of formula A-C-A or (A-C')ₙ-X, wherein A stands for a polymer block of a vinyl aromatic monomer, X stands for a coupling moiety, n stands for an integer of 2 to 20, and C respectively C' stand for a polymer block of a conjugated diene monomer, hydrogenated to an extent of at least 50% wherein the total amount of A in block copolymer (c) is in the range of from 22 to 40 weight% and wherein the block copolymer has an apparent molecular weight of from 140,000 to 300,000 (A-C-A), respectively of from n*70,000 to n*150,000 ((A-C')ₙ-X ),
   wherein component 1 and 2 together form 50 to 70% by weight of the total binder, the remainder of the binder being based on
3. from 30 to 50% by weight on the total binder of a pigment and/or filler, and
4. from 0 to 4% by weight on the total binder of a UV stabilizer.

The invention also provides the non-bituminous, colourable binder composition for making the roofing felt or membrane. With suitably chosen light (white) coloured pigments and/or fillers, the invention also provides a coloured (white) composition with high emittance and reflectance. Cool roofing products are therefore also within the ambit of the present invention.

The colourable binder composition may also be used for other (cool) products, for instance as sealant or coating.

### Mode(s) for carrying out the invention

### Component 2 (hydrogenated block copolymer (c))

Hydrogenated Styrenic block copolymers block copolymers are known in the art. Such copolymers are available as triblock copolymers (made sequentially or by coupling a diblock copolymer), as tetrablock copolymers or multiblock copolymers, as linear copolymers and also as branched or radial copolymers (using a multifunctional coupling agent and/or a multifunctional copolymer during its preparation). Such copolymers are typically based on styrene and either butadiene or isoprene or a mixture thereof, which is subsequently hydrogenated. However, similar copolymers are obtained using substituted styrenes as monovinyl arenes and/or using C5 to C8 conjugated dienes. Hydrogenated styrenic block copolymers are, for instance available as KRATON® G polymers.

Typical hydrogenated styrenic block copolymers include SEBS (styrene-ethylene-butylene-styrene block copolymer) and SEPS (styrene-ethylenepropylene-styrene block copolymers). Those which have a molecular weight of from 140,000-300,000, preferably 160 to 200,000; a melt index (200°C, 5 kg) of not more than 10 g/10 minutes; a polystyrene content of from 22to 40%, preferably from 25 to 35%; and a specific gravity of at least 0.9 are preferred. It will be appreciated that coupled block copolymers may have a higher molecular weight in case a coupling agent or multifunctional monomer is used with a functionality greater than 2.

It will also be appreciated that block copolymers, prepared by means of coupling of living diblock copolymers by means of a coupling agent and termination of remaining living block copolymers, will finally contain small amounts (e.g., less than 20 mole%) of diblock copolymer.

The apparent molecular weights of the complete block copolymers and each of the intermediate precursors have been determined by Gel Permeation Chromatography using commercially available polystyrene standards (according to ASTM D6474-99).

The hydrogenated styrenic block copolymers mentioned above may contain functional groups, e.g., by grafting as described in US patents Nos. 4,738,503 or 4,578,429 (incorporated by reference).

### Component 1 (hydrogenated petroleum resin (a))

The bitumen-like compound should have a PEN value of at least 30 dmm at 25°C. Suitable bitumen-like compounds are disclosed in JP2002-206047A, the contents of which are included herein by reference. Compositions of particular relevance comprise the hydrogenated petroleum resin (a) and oil (b) with a flash point of 230°C or above and a paraffinic content of at least 50% and a viscosity of at least 7 mm²/s (100°C). Preferably, the bitumen-like compound comprises less than 40 wt% of the oil. In a particularly preferred embodiment the binder composition comprises a bitumen-like compound comprising from 55 to 75 wt% of the hydrogenated petroleum resin (a); from 15 to 35 wt% of the oil (b); and from 10 to 20 wt% of the block copolymer (c).

Hydrogenated resins are known in the art and include for instance the resins described in EP0802251A. Preferably, the resins of the present invention have a Ring and Ball softening point, according to test method ASTM E28, of from 50° to 150°C, more preferably of from 60° to 140°C, most preferably of from 95° to 105°C. Regarding its chemical nature, a "resin" according to the present invention may include:

(a) natural and modified rosins, such as, for example, gum rosin, tall-oil rosin, distilled rosin, hydrogenated rosin or otherwise modified rosins;

(b) aliphatic petroleum hydrocarbon resins, the latter resins resulting from the polymerization of monomers comprising primarily olefins and diolefins;

(c) aromatic petroleum hydrocarbons;

(d) aliphatic/aromatic petroleum derived hydrocarbons;

(e) polar or otherwise modified aliphatic and/or aromatic hydrocarbon resins, such as, for example, copolymers and terpolymers of petroleum hydrocarbon resins with vinyl monomers, or mixtures thereof.

Mixtures of two or more of the above resins may be required or advantageous for some formulations. Also included are (preferably partially) hydrogenated or hydrotreated derivates of the above resins and any mixture thereof with other (hydrogenated or not hydrogenated, modified or unmodified) resin.

Partially hydrogenated resins are preferred in the present invention. These are available under the trade-name "REGALITE® Hydrogenated Hydrocarbon Resin" from Eastman, "ESCOREZ™)" from Exxon Mobile Chemical, "ARKON™ M" from Arakawa Chemical Ind., and the like.

Hydrogenation of such resins to a degree of at least 70% based on the initial unsaturation is preferred.

### Oil (b)

As far as the oil is concerned, again the oils disclosed in JP2002-206047A may be used, including both mineral oils and naphthenic oils. DRAKEOL™ 34 has been found to be quite useful.

Components 1 and 2 preferably form between 50 and 70% by weight of the binder composition, more preferably from 55 to 65% by weight.

### Components 3

The colourable composition will comprise pigments such as TiO₂, carbon black, and the like. As filler crushed limestone and the like may be used (e.g., DURCAL™ 10 or WIGRO™). Such pigments and fillers are typically used in amounts of from 30 to 50 percent by weight on the whole composition. Indeed this component may be based on pigments only, or on filler only.

### Component 4

UV stabilizers are known. A conventional stabilizer is IRGANOX ™ 1010, for instance used in combination with TINUVIN™ 327 and/or 770. Binder compositions may be formulated without any UV stabilizers. However, it has been found that very minor amounts of UV stabilizers result in a substantial improvement of the ageing performance of the coloured binder composition and roofing felt. The use of from 0.5 to 2% is preferred.

### Further components

The binder composition may also comprise minor amounts of engineering thermoplastics selected from polyolefins and in particular polyethylene and polypropylene, halogenated polyolefins, chlorosulfonated polyolefins, polyvinyl chloride, EPDM, polystyrene, polyphenylene oxide, PET and analogous poly(alkylene therephthalates). If used, the preferred engineering plastics are atactic polypropylene, EPDM and other thermoplastics that have a melt index in the range of 5 to 25. Such engineering thermoplastics may for instance be used in amounts up to and equal to the amount of hydrogenated block copolymer (c).

The invention is described below by means of examples and comparative examples, but the invention is not limited by these examples and comparative examples.

### Examples

The examples and comparative examples were prepared in accordance with the combinations indicated in the tables below. The amounts compounded are all indicted in units of wt%. Moreover, the colourable binder compositions for roofing purposes were produced using a homogenizer at a mixing temperature of 180°C, a homogenizer rotation rate of 3,000 rpm with a mixing time of 1 hour. The finished colourable binder compositions for roofing purposes were subjected to needle penetration using the method of ASTM D5 and softening point measurements (R&B: ring & ball) using the methods of ASTM D36 or E28, for PMB's and resins, respectively. The flow and cold bend were measured according to DIN 52123 (Aug. 1985) and UEAtc M.O.A.T. No.31 (1984), respectively.

The binder was formed into a sheet measuring 10 cm x 10 cm x 3 mm for high temperature flow testing and a sheet measuring 5 cm x 20 cm x 3 mm for low temperature flexibility testing. Accelerated ageing tests were carried out on the sheets in an air ventilated oven at 80°C.

### Experiment 1

A colourable composition was prepared based on 25 parts by weight (pbw) mineral oil (having a flash point of about 250°C and a paraffinic content of about 70%), and 75 pbw of a (100%) hydrogenated petroleum resin, making a total of 100 parts of the bitumen-like compound. To this 14 parts pbw SEBS (having a polystyrene content of about 30% and a molecular weight of about 190,000) is added. To this composition 5% pigment (titanium oxide), 35% filler (limestone) and 1.82% UV stabilizer was added (percentages calculated on the entire binder). The coloured binder composition had a R&B of 137°C, a PEN at 25°C of 62 dmm, a PEN at 50°C of 79 dmm, a DIN flow pass at 115°C and a cold bend pass at -10°C.

Monitoring colour stability as well as other roofing properties over time (e.g. 2 months) will show no differences.

### Experiment 2

A similar coloured binder composition was prepared with 30 pbw of oil and 70 pbw of resin. The coloured binder composition had a R&B of 136°C, a PEN at 25°C of 68 dmm, a PEN at 50°C of 84 dmm, a DIN flow pass at 115°C and a cold bend pass at -15°C.

### Conclusion

The coloured binder compositions of Experiment 1 and 2 combine outstanding high and low temperature properties with long term colour stability.

## Claims

1. A colourable roofing felt comprising fibrous material and a non-bituminous binder comprising:
1. a bitumen-like compound having a PEN value of at least 30 dmm at 25°C, and comprising at least a hydrogenated petroleum resin (a) or comprising at least a hydrogenated petroleum resin (a) and an oil (b),
2. from 10 to 25 parts by weight on 100 parts of the bitumen-like compound of a hydrogenated styrenic block copolymer (c) of formula A-C-A or (A-C')ₙ-X,
wherein A stands for a polymer block of a vinyl aromatic monomer, X stands for a coupling moiety, n stands for an integer of 2 to 20, and C respectively C' stand for a polymer block of a conjugated diene monomer, hydrogenated to an extent of at least 50%
wherein the total amount of A in block copolymer (c) is in the range of from 22 to 40 weight% and wherein the block copolymer has an apparent molecular weight of from 140,000 to 300,000 (A-C-A), respectively of from n*70,000 to n*150,000 ( (A-C')ₙ-X ),
wherein component 1 and 2 together form 50 to 70% by weight of the total binder, the remainder of the binder being based on
3. from 30 to 50% by weight on the total binder of a pigment and/or filler, and
4. from 0 to 4% by weight on the total binder of a UV stabilizer.

2. A non-bituminous, colourable binder composition for making the roofing felt or membrane comprising:
1. a bitumen-like compound having a PEN value of at least 30 dmm at 25°C, and comprising at least a hydrogenated petroleum resin (a) or comprising at least a hydrogenated petroleum resin (a) and an oil (b),
2. from 10 to 25 parts by weight on 100 parts of the bitumen-like compound of a hydrogenated styrenic block copolymer (c) of formula A-C-A or (A-C')ₙ-X,
wherein A stands for a polymer block of a vinyl aromatic monomer, X stands for a coupling moiety, n stands for an integer of 2 to 20, and C respectively C' stand for a polymer block of a conjugated diene monomer, hydrogenated to an extent of at least 50%
wherein the total amount of A in block copolymer (c) is in the range of from 22 to 40 weight% and wherein the block copolymer has an apparent molecular weight of from 140,000 to 300,000 (A-C-A), respectively of from n*70,000 to n*150,000 ((A-C')ₙ-X),
wherein component 1 and 2 together form 50 to 70% by weight of the total binder, the remainder of the binder being based on
3. from 30 to 50% by weight on the total binder of a pigment and/or filler, and
4. from 0 to 4% by weight on the total binder of a UV stabilizer.

## Patentansprüche

1. Färbbare Dachpappe umfassend faserhaltiges Material und einen nicht bituminösen Binder, der umfasst:
1. eine bitumenähnliche Verbindung mit einem PEN-Wert von wenigstens 30 dmm bei 25°C und umfassend wenigstens ein hydriertes Petroleumharz (a) oder umfassend wenigstens ein hydriertes Petroleumharz (a) und ein Öl (b),
2. 10-25 Gewichtsteile auf 100 Teile der bitumenähnlichen Verbindung eines hydrierten Styrolblockcopolymers (c) der Formel A - C - A oder (A - C')ₙ-X, worin A für einen Polymerblock eines vinylaromatischen Monomers steht, X für eine Kopplungseinheit, n steht für eine ganze Zahl zwischen 2 und 20, und C bzw. C' steht für einen Polymerblock eines konjugierten Dienmonomers, das wenigstens zu 50% hydriert ist,
und worin die gesamte Menge von A im Blockcopolymer im Bereich von 22 - 40 Gew% liegt und worin das Blockcopolymer ein scheinbares Molekulargewicht von 140.000 - 300.000 (A - C - A) bzw. von n*70.000 bzw. n*150.000 (A - C')ₙ-X aufweist, und worin die Verbindungen 1 und 2 zusammen 50-70 Gew% des gesamten Bindemittels bilden und der Rest des Binders auf
3. 30-50 Gew% bezogen auf den gesamten Binder eines Pigments und/oder Füllstoffs, und
4. 0-4 Gew% bezogen auf den gesamten Binder eines UV-Stabilisators basiert.

2. Nicht-bituminöse färbbare Binderzusammensetzung zur Herstellung der Dachpappe oder der Dachfolie umfassend:
1. eine bitumenähnliche Verbindung mit einem PEN-Wert von wenigstens 30 dmm bei 25°C und umfassend wenigstens ein hydriertes Petroleumharz (a) oder umfassend wenigstens ein hydriertes Petroleumharz (a) und ein Öl (b),
2. 10-25 Gewichtsteile auf 100 Teile der bitumenähnlichen Verbindung eines hydrierten Styrolblockcopolymers (c) der Formel A - C - A oder (A - C')ₙ-X, worin A für einen Polymerblock eines vinylaromatischen Monomers steht, X für eine Kopplungseinheit, n steht für eine ganze Zahl zwischen 2 und 20, und C bzw. C' steht für einen Polymerblock eines konjugierten Dienmonomers, das wenigstens zu 50% hydriert ist,
und worin die gesamte Menge von A im Blockcopolymer im Bereich von. 22 - 40 Gew% liegt und worin das Blockcopolymer ein scheinbares Molekulargewicht von 140.000 - 300.000 (A - C - A) bzw. von n*70.000 bzw. n*150.000 (A - C')ₙ-X aufweist, und worin die Verbindungen 1 und 2 zusammen 50-70 Gew% des gesamten Bindemittels bilden und der Rest des Binders auf
3. 30-50 Gew% bezogen auf den gesamten Binder eines Pigments und/oder Füllstoffs und
4. 0-4 Gew% bezogen auf den gesamten Binder eines UV-Stabilisators
basiert.

## Revendications

1. Carton bitumé pour toiture colorable contenant un matériau fibreux et un liant non bitumineux comprenant :
1. un composé de type bitume ayant une valeur PEN d'au moins 30 dmm à 25°C et comprenant au moins une résine de pétrole hydrogénée (a) ou au moins une résine de pétrole hydrogénée (a) et une huile (b),
2. 10 à 25 parties en poids sur 100 parties du composé de type bitume d'un copolymère séquencé hydrogéné à base de styrène (c) de formule A-C-A ou (A-C')ₙX, où A désigne une séquence polymère d'un monomère vinylaromatique, X désigne un radical de couplage et n désigne un nombre entier de 2 à 20 et C, respectivement C', désigne une séquence polymère d'un monomère de diène conjugué, hydrogéné jusqu'à au moins 50%, où la quantité totale de A dans le copolymère séquencé (c) se situe dans la plage de 22 à 40% en poids et où le copolymère séquencé a un poids moléculaire apparent de 140.000 à 300.000 (A-C-A), respectivement de n*70.000 à n*150.000 ((A-C')ₙX), où les composants 1 et 2 forment conjointement 50 à 70% en poids du liant total, le restant du liant étant basé sur
3. 30 à 50% en poids sur le liant total d'un pigment et/ou d'une charge, et
4. 0 à 4% en poids du liant total d'un stabilisateur aux UV.

2. Composition liante colorable non bitumineuse pour fabriquer le carton bitumé ou la membrane pour toiture comprenant :
1. un composé de type bitume ayant une valeur PEN d'au moins 30 dmm à 25°C et comprenant au moins une résine de pétrole hydrogénée (a) ou comprenant au moins une résine de pétrole hydrogénée (a) et une huile (b),
2. 10 à 25 parties en poids sur 100 parties du composé de type bitume d'un copolymère séquencé hydrogéné à base de styrène (c) de formule A-C-A ou (A-C')ₙX, où A désigne une séquence polymère d'un monomère vinylaromatique, X désigne un radical de couplage et n désigne un nombre entier de 2 à 20 et C, respectivement C', désigne une séquence polymère d'un monomère de diène conjugué, hydrogéné jusqu'à au moins 50%, où la quantité totale de A dans le copolymère séquence (c) se situe dans la plage de 22 à 40% en poids et où le copolymère séquencé a un poids moléculaire apparent de 140.000 à 300.000 (A-C-A), respectivement de n*70.000 à n*150.000 ((A-C')ₙX), où les composants 1 et 2 forment conjointement 50 à 70% en poids du liant total, le restant du liant étant basé-sur
3. 30 à 50% en poids sur le liant total d'un pigment et/ou d'une charge, et
4. 0 à 4% en poids du liant total d'un stabilisateur aux UV.
